# EUROPEAN PATENT APPLICATION

(11) **EP 4 462 507 A1**
(43) Date of publication of application: **13.11.2024**
(21) Application number: 24165525.7
(22) Date of filing: 22.03.2024
(51) Int. Cl.: H01M 4/38, H01M 4/134, H01M 4/62, H01M 10/052, H01M 10/0562, H01M 10/0525, H01M 4/02

(54) **SILICON CLATHRATE ELECTRODE ACTIVE MATERIAL, NEGATIVE ELECTRODE MIXTURE, NEGATIVE ELECTRODE ACTIVE MATERIAL LAYER, AND SOLID-STATE LITHIUM-ION BATTERY**

(30) Priority: 09.05.2023 JP 2023077431
(71) Applicant: TOYOTA JIDOSHA KABUSHIKI KAISHA, Aichi-ken 471-8571 (JP)
(72) Inventor: OTAKI, Mitsutoshi, Toyota-shi, 471-8571 (JP); YOSHIDA, Jun, Toyota-shi, 471-8571 (JP); YAMAGUCHI, Yasuhiro, Toyota-shi, 471-8571 (JP); EGUCHI, Tatsuya, Toyota-shi, 471-8571 (JP); HARATA, Masanori, Toyota-shi, 471-8571 (JP); NIIMI, Tomohiro, Toyota-shi, 471-8571 (JP); YUKAWA, Kayoko, Toyota-shi, 471-8571 (JP); URABE, Kota, Toyota-shi, 471-8571 (JP)
(74) Representative: D Young & Co LLP

(57) **Abstract**

The present disclosure provides a silicon clathrate electrode active material having low expansion during charging and a solid-state lithium-ion battery comprising such a silicon clathrate electrode active material. The silicon clathrate electrode active material of the present disclosure comprises greater than 0% by mass and less than 19.4% by mass of oxygen atoms. The solid-state lithium-ion battery of the present disclosure comprises the negative electrode active material layer of the present disclosure. The negative electrode active material layer of the present disclosure contains the negative electrode mixture of the present disclosure. The negative electrode mixture of the present disclosure comprises a silicon clathrate electrode active material and a solid electrolyte.

## Description

### FIELD

The present disclosure relates to a silicon clathrate electrode active material, a negative electrode mixture, a negative electrode active material layer, and a solid-state lithium-ion battery.

### BACKGROUND

In recent years, there has been ongoing development of batteries. For example, in the automotive industry, the development of batteries for use in electric vehicles or hybrid vehicles has been advancing. In addition, silicon is known as an electrode active material used in batteries, particularly lithium-ion batteries.

Silicon electrode active materials have a large theoretical capacity and are effective in high energy densification of batteries. However, silicon electrode active materials have a problem of large expansion during charging. On the other hand, it is known that using a silicon clathrate electrode active material as a silicon electrode active material suppresses expansion during charging.

For example, PTL 1 discloses a silicon clathrate electrode active material comprising a silicon clathrate type II crystal phase and having a composition of NaₓSi₁₃₆ (1.98 < x < 2.54). PTL 2 discloses a silicon clathrate electrode active material comprising a silicon clathrate type II crystal phase and including voids inside primary particles, wherein a void amount of the voids having a fine pore diameter of 100 nm or less is 0.05 cc/g or more and 0.15 cc/g or less.

### [CITATION LIST]

### [PATENT LITERATURE]

[PTL 1] Japanese Unexamined Patent Publication (Kokai) No. 2021-158003
[PTL 2] Japanese Unexamined Patent Publication (Kokai) No. 2021-158004

### SUMMARY

### [TECHNICAL PROBLEM]

Although silicon clathrate electrode active materials can suppress expansion during charging as compared to conventional silicon electrode active materials, there is a demand for further suppressing expansion of silicon clathrate electrode active materials during charging.

An object of the present disclosure is to provide a silicon clathrate electrode active material having low expansion during charging and a solid-state lithium-ion battery comprising such a silicon clathrate electrode active material.

### [SOLUTION TO PROBLEM]

The present disclosers have discovered that the above object can be achieved by the following means.

### <Aspect 1>

A silicon clathrate electrode active material, comprising greater than 0% by mass and less than 19.4% by mass of oxygen atoms.

### <Aspect 2>

The silicon clathrate electrode active material according to Aspect 1, comprising 2.0% by mass or greater of oxygen atoms.

### <Aspect 3>

The silicon clathrate electrode active material according to Aspect 2, comprising 3.3% by mass or greater and 7.0% by mass or less of oxygen atoms.

### <Aspect 4>

The silicon clathrate electrode active material according to Aspect 1, at least partially having a clathrate type II structure.

### <Aspect 5>

A negative electrode mixture, comprising the silicon clathrate electrode active material according to Aspect 1 and a solid electrolyte.

### <Aspect 6>

The negative electrode mixture according to Aspect 5, wherein the solid electrolyte is a sulfide solid electrolyte.

### <Aspect 7>

A negative electrode active material layer, containing the negative electrode mixture according to Aspect 5.

### <Aspect 8>

A solid-state lithium-ion battery, comprising the negative electrode active material layer according to Aspect 7.

### [ADVANTAGEOUS EFFECTS OF INVENTION]

According to the present disclosure, a silicon clathrate electrode active material having low expansion during charging and a solid-state lithium-ion battery comprising such a silicon clathrate electrode active material can be provided.

### BRIEF DESCRIPTION OF DRAWINGS

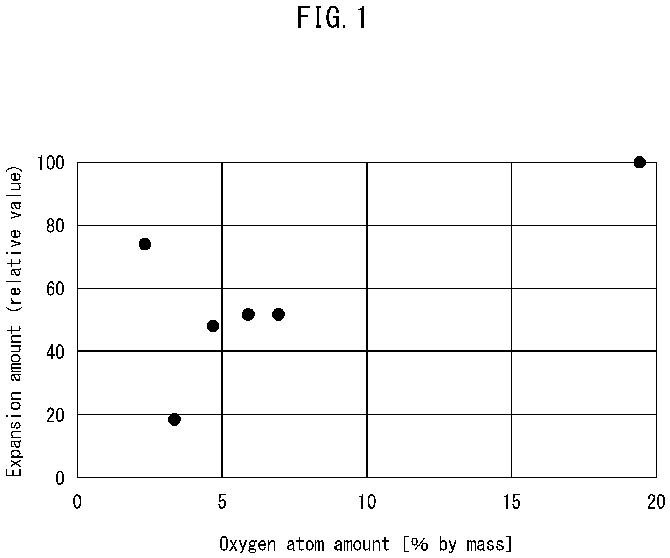

FIG. 1 is a graph showing the relationship between oxygen atom amount in a silicon clathrate electrode active material and expansion amount in Examples 1 to 5 and Comparative Example 1.

### DESCRIPTION OF EMBODIMENTS

Hereinafter, embodiments of the present disclosure will be described in detail. It should be noted that the present disclosure is not limited to the following embodiments, and various modifications can be made thereto within the scope of the disclosure.

### «Silicon clathrate electrode active material»

The silicon clathrate electrode active material of the present disclosure comprises greater than 0% by mass and less than 19.4% by mass of oxygen atoms.

The present disclosers have unexpectedly discovered that a silicon clathrate electrode active material comprising a predetermined amount of oxygen atoms has low expansion during charging.

Without intending to be bound by any theory, the reason therefor is presumed as follows. Specifically, it is considered that a silicon clathrate electrode active material has low lithium-ion conducting properties, but when a moderate amount of oxygen atoms is present in the silicon clathrate electrode active material, silicon oxide and lithium react to form an ion conductor such as lithium silicate and ion-conducting properties of the silicon clathrate electrode active material are increased, and charging reactions thereby proceed uniformly to suppress expansion during charging. Further, it is considered that by not having an excessive amount of oxygen atoms in the silicon clathrate electrode active material, electrical conduction properties are not hindered, and charging reactions proceed uniformly to suppress expansion during charging.

The "electrode active material" relating to the present disclosure can be used as a "positive electrode active material" or a "negative electrode active material", and is used particularly as a "negative electrode active material".

The silicon clathrate electrode active material of the present disclosure comprises greater than 0% by mass and less than 19.4% by mass of oxygen atoms. It is preferable that the oxygen atom amount be within the above range to sufficiently suppress expansion during charging.

The silicon clathrate electrode active material may comprise 1.0% by mass or greater, 2.0% by mass or greater, 2.5% by mass or greater, 2.7% by mass or greater, 2.9% by mass or greater, 3.0% by mass or greater, 3.1% by mass or greater, 3.2% by mass or greater of oxygen atoms, or 3.3% by mass or greater of oxygen atoms, and may comprise 15.0% by mass or less, 10.0% by mass or less, 9.0% by mass or less, 8.0% by mass or less, or 7.0% by mass or less. Specifically, the silicon clathrate electrode active material particularly preferably comprises 3.3% by mass or greater and 7.0% by mass or less of oxygen atoms. When the oxygen atom amount is within the above range, expansion during charging can be further decreased.

The measurement method of the oxygen atom amount is not particularly limited, and methods of calculating from elemental analysis using an oxygen/nitrogen/hydrogen analyzer or analysis values from EDX or XPS are exemplified. Specifically, for this measurement, an EMGA-930 from HORIBA, Ltd. can be used as the oxygen/nitrogen/hydrogen analyzer.

The silicon clathrate electrode active material of the present disclosure can at least partially have a clathrate type II structure. In this case, expansion during charging can be further decreased.

To adjust the ratio of oxygen atoms in the silicon clathrate electrode active material, oxidation treatment and oxygen removal treatment of the silicon clathrate electrode active material can be carried out.

As a specific oxidation treatment, the silicon clathrate electrode active material can be placed in an oxidizing atmosphere and optionally heated.

Examples of the oxygen removal treatment include a reduction treatment and a silicon oxide removal treatment. In the silicon oxide removal treatment, the silicon clathrate electrode active material can be immersed in a solution capable of dissolving and removing silicon oxide, for example, a hydrogen fluoride solution. When the silicon clathrate electrode active material comprises lithium silicate (Li₂SiO₃), it is possible to convert lithium silicate to soluble silicic acid (H₂SiO₃) using a hydrogen chloride solution (hydrochloric acid) and remove the silicic acid to decrease oxygen atoms in the silicon clathrate electrode active material (Li₂SiO₃ + 2 HCl → 2 LiCl (dissolved) + H₂SiO₃ (dissolved)).

By preliminarily carrying out an oxidation treatment before the silicon oxide removal treatment with a solution capable of dissolving and removing silicon oxide, oxygen removal in a subsequent oxygen removal treatment can be promoted.

### <<Negative electrode mixture>>

The negative electrode mixture of the present disclosure comprises a silicon clathrate electrode active material and a solid electrolyte. In addition, the negative electrode mixture of the present disclosure optionally comprises a conductive aid and a binder.

The "negative electrode mixture" relating to the present disclosure means a composition that can constitute a negative active material layer as-is or by further containing additional components. Further, the "negative electrode mixture slurry" relating to the present disclosure means a slurry that comprises a dispersion medium in addition to the "negative electrode mixture" and can thereby be applied and dried to form a negative electrode active material layer.

### <Silicon clathrate electrode active material>

The above descriptions relating to the silicon clathrate electrode active material of the present disclosure can be referenced regarding the silicon clathrate electrode active material.

### <Solid electrolyte>

The material of the solid electrolyte is not particularly limited, and any material usable as a solid electrolyte used in lithium-ion batteries can be used. For example, the solid electrolyte may be a sulfide solid electrolyte, an oxide solid electrolyte, or a polymer electrolyte, and is preferably a sulfide solid electrolyte.

Examples of the sulfide solid electrolyte include, but are not limited to, sulfide amorphous solid electrolytes, sulfide crystalline solid electrolytes, and argyrodite-type solid electrolytes. Specific examples of the sulfide solid electrolyte can include, but are not limited to, Li₂S-P₂S₅-based (such as Li₇P₃S₁₁, Li₃PS₄, and Li₈P₂S₉), Li₂S-SiS₂, LiI-Li₂S-SiS₂, LiI-Li₂S-P₂S₅, LiI-LiBr-Li₂S-P₂S₅, Li₂S-P₂S₅-GeS₂ (such as Li₁₃GeP₃S₁₆ and Li₁₀GeP₂S₁₂), LiI-Li₂S-P₂O₅, LiI-Li₃PO₄-P₂S₅, and Li₇₋ₓPS₆₋ₓClₓ; and combinations thereof.

Examples of the oxide solid electrolyte include, but are not limited to, Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3}-ₓTiO₃, Li₁₊ₓAlₓTi₂₋ₓ(PO₄)₃, Li₁₊ₓAlₓGe₂₋ₓ(PO₄)₃, Li₃PO₄, and Li₃₊ₓPO₄₋ₓNₓ(LiPON).

The sulfide solid electrolyte and the oxide solid electrolyte may be glass or crystallized glass (glass ceramics).

Examples of the polymer electrolyte include, but are not limited to, polyethylene oxide (PEO), polypropylene oxide (PPO), and copolymers thereof.

The mass ratio (mass of silicon clathrate electrode active material : mass of solid electrolyte) of the silicon clathrate electrode active material to the solid electrolyte in the negative electrode mixture is preferably 85:15 to 30:70, and more preferably 80:20 to 40:60.

### <Conductive aid>

The conductive aid is not particularly limited. For example, the conductive aid may be, but is not limited to, a carbon material, such as VGCF (vapor-grown carbon fiber) or carbon nanofiber, or a metal material.

### <Binder>

The binder is not particularly limited. For example, the binder may be of, but is not limited to, a material such as polyvinylidene fluoride (PVdF), butadiene rubber (BR), polytetrafluoroethylene (PTFE), or styrene-butadiene rubber (SBR), or a combination thereof.

### <<Negative electrode active material layer>>

The negative electrode active material layer of the present disclosure contains the negative electrode mixture of the present disclosure. The above descriptions relating to the negative electrode mixture of the present disclosure can be referenced regarding the negative electrode mixture.

The thickness of the negative electrode active material layer, for example, may be 0.1 to 1000 µm.

### «Solid-state lithium-ion battery»

The solid-state lithium-ion battery of the present disclosure comprises the negative electrode active material layer of the present disclosure. In addition, the solid-state lithium-ion battery of the present disclosure may comprise a negative electrode current collector layer, the negative electrode active material layer of the present disclosure, a solid electrolyte layer, a positive electrode active material layer, and a positive electrode current collector layer in this order. Further, the lithium-ion battery of the present disclosure can be restrained by restraining members such as endplates from both sides in the laminating direction of the above layers.

The "solid-state battery" relating to the present disclosure means a battery using at least a solid electrolyte as the electrolyte, and therefore the solid-state battery may use a combination of a solid electrolyte and a liquid electrolyte as the electrolyte. In addition, the solid-state battery of the present disclosure may be an all-solid-state battery , i.e., a battery using only a solid electrolyte as the electrolyte.

In the lithium-ion battery of the present disclosure, since the negative electrode active material layer contains the silicon clathrate electrode active material of the present disclosure, expansion associated with charging is decreased, thereby suppressing an increase in restraining pressure associated with charging.

### <Negative electrode current collector layer>

The material used in the negative electrode current collector layer is not particularly limited. Any material that can be used as a negative electrode current collector for batteries can be appropriately adopted. For example, the material may be, but is not limited to, a stainless steel (SUS), aluminum, copper, nickel, iron, titanium, carbon, or resin current collector.

The shape of the negative electrode current collector layer is not particularly limited. Examples thereof can include foil-like, plate-like, and mesh-like. Among these, a foil-like shape is preferable.

### <Negative electrode active material layer>

The above descriptions relating to the negative electrode active material layer of the present disclosure can be referenced regarding the negative electrode active material layer.

### <Solid electrolyte layer>

The solid electrolyte layer comprises at least a solid electrolyte. In addition, the solid electrolyte layer may comprise a binder in addition to the solid electrolyte, as needed. The above descriptions relating to the negative electrode active material layer of the present disclosure can be referenced regarding the solid electrolyte and the binder.

The solid electrolyte layer may be impregnated with an electrolytic solution having lithium-ion conducting properties.

The electrolytic solution preferably contains supporting salt of the electrolytic solution and a solvent. Examples of the supporting salt (lithium salt) of the electrolytic solution having lithium-ion conducting properties include inorganic lithium salts such as LiPF₆, LiBF₄, LiClO₄, and LiAsF₆; and organic lithium salts such as LiCF₃SO₃, LiN(CF₃SO₂)₂, LiN(C₂F₅SO₂)₂, LiN(FSO₂)₂, and LiC(CF₃SO₂)₃ Examples of the solvent used in the electrolytic solution include cyclic esters (cyclic carbonates) such as ethylene carbonate (EC), propylene carbonate (PC), and butylene carbonate (BC); and chain esters (chain carbonates) such as dimethyl carbonate (DMC), diethyl carbonate (DEC), and ethyl methyl carbonate (EMC). The electrolytic solution preferably contains two or more solvents.

The thickness of the solid electrolyte layer, for example, is 0.1 to 1000 µm. The thickness of the solid electrolyte layer is preferably 0.1 to 300 µm, and is further particularly preferably 0.1 to 100 µm.

### <Positive electrode active material layer>

The positive electrode active material layer is a layer containing a positive electrode active material and optionally a solid electrolyte, a conductive aid, and a binder.

The material of the positive electrode active material is not particularly limited. For example, the positive electrode active material may be, but is not limited to, lithium cobaltate (LiCoO₂), lithium nickelate (LiNiO₂), lithium manganate (LiMn₂O₄), LiCo_{1/3}Ni_{1/3}Mn_{1/3}O₂, or a heteroelement-substituted Li-Mn spinel having a composition represented by Li₁₊ₓMn_{2-x-y}M_{y}O₄ (M is one or more metallic elements selected from Al, Mg, Co, Fe, Ni, and Zn).

The positive electrode active material can comprise a covering layer. The covering layer is a layer containing a material that has lithium-ion conducting performance, has low reactivity with the positive electrode active material and the solid electrolyte, and can maintain the form of a covering layer that does not flow even when brought into contact with the active material or the solid electrolyte. Specific examples of the material constituting the covering layer can include, but are not limited to, Li₄Ti₅O₁₂ and Li₃PO₄, in addition to LiNbO₃.

Examples of the shape of the positive electrode active material include particulate. The average particle size (D50) of the positive electrode active material is not particularly limited, and for example, is 10 nm or more, and may be 100 nm or more. The average particle size (D50) of the positive electrode active material, for example, is 50 µm or less, and may be 20 µm or less. The average particle size (D50) can be calculated from measurements with, for example, a laser diffraction particle size distribution analyzer or a scanning electron microscope (SEM).

The above descriptions relating to the negative electrode mixture of the present disclosure can be referenced regarding the solid electrolyte, the conductive aid, and the binder.

When the positive electrode active material layer contains a solid electrolyte, the mass ratio (mass of positive electrode active material : mass of solid electrolyte) of the positive electrode active material to the solid electrolyte in the positive electrode active material layer is preferably 85:15 to 30:70, and more preferably 80:20 to 40:60.

The thickness of the positive electrode active material layer is, for example, 0.1 µm or more and 1000 µm or less.

### <Positive electrode current collector layer>

The material and shape used for the positive electrode current collector layer are not particularly limited, and the above descriptions relating to the negative electrode active material layer of the present disclosure can be referenced therefor. The material of the positive electrode current collector layer is preferably aluminum, and the shape thereof is preferably foil-like.

### EXAMPLES

### <<Synthesis of silicon clathrate electrode active material>>

### <Alloying>

### (Example 1)

As a silicon (Si) source, Si powder (Japan Pure Chemical Co., Ltd., SIEPB32) was prepared. The Si powder and metallic lithium (Li) were weighed at a molar ratio of Li/Si = 4.0, the weighed Si powder and Li were mixed in a mortar in an argon atmosphere to obtain a lithium-silicon alloy. The obtained lithium-silicon alloy was reacted with ethanol in an argon atmosphere to obtain Si powder having voids inside the primary particles, i.e., Si powder having a porous structure.

The Si powder having a porous structure and sodium hydride (NaH) as a sodium (Na) source were used to manufacture a sodium-silicon (NaSi) alloy. It should be noted that the NaH used was preliminarily washed with hexane. NaH and the Si powder having a porous structure were weighed at a molar ratio of 1.05:1, and the weighed NaH and Si powder having a porous structure were mixed with a cutter mill. The obtained mixture was heated under the conditions of 500°C and 40 h in an argon atmosphere with a heating furnace to obtain a powdery NaSi alloy.

### <Clathratization>

The obtained NaSi alloy and aluminum fluoride (AlF₃) were weighed at a molar ratio of 1:0.35, and the weighed NaSi alloy and AlF₃ were mixed with a cutter mill to obtain a reaction material. The obtained powdery reaction material was placed in a reaction vessel made of stainless steel and heated under the conditions of 310°C and 60 h in an argon atmosphere with a heating furnace to obtain a reaction product comprising silicon clathrate. The obtained reaction product was placed in an apparatus capable of depressurization and gas replacement, the inside of the apparatus was depressurized at room temperature, and atmospheric air was then introduced for oxidation. The oxidized reaction product was acid-washed using a mixed solvent of HNO₃ and H₂O mixed at a volume ratio of 10:90 to remove by-products in the reaction product. After washing, the reaction product was filtered and the filtered solid content was dried at 120°C for 3 h or more to obtain a powdery silicon clathrate electrode active material. The obtained silicon clathrate electrode active material was further treated with a 3-wt% HF solution at 25°C for 3 h, filtered, and then dried at 120°C for 3 h or more to obtain the silicon clathrate electrode active material of Example 1.

### (Example 2)

Except that oxidation for clathratization was not carried out, the silicon clathrate electrode active material of Example 2 was obtained in the same manner as in Example 1.

### (Example 3)

Except that in clathratization, atmospheric air was introduced for oxidation such that the amount of atmospheric air introduced was 1/100 of that in Example 1, the silicon clathrate electrode active material of Example 3 was obtained in the same manner as in Example 1.

### (Example 4)

Except that the silicon clathrate electrode active material was treated with a hydrogen chloride (HCl) solution, the silicon clathrate electrode active material of Example 4 was obtained in the same manner as in Example 2.

### (Example 5)

Except that the silicon clathrate electrode active material was treated with a HF solution at 0°C, the silicon clathrate electrode active material of Example 5 was obtained in the same manner as in Example 2.

### (Comparative Example 1)

Except that the silicon clathrate electrode active material was not treated with a HF solution, the silicon clathrate electrode active material of Comparative Example 1 was obtained in the same manner as in Example 2.

The silicon clathrate electrode active material of each example comprised a clathrate type II crystal phase.

### <<Production of lithium-ion battery>>

Using the silicon clathrate electrode active material of each example, a lithium-ion battery of each example was produced as follows.

### <Preparation of negative electrode mixture>

Butyl butyrate, a 5-wt% butyl butyrate solution of a polyvinylidene fluoride (PVDF)-based binder, vapor-grown carbon fiber (VGCF) as the conductive aid, the synthesized silicon clathrate electrode active material, and a Li₂S-P₂S₅-based glass ceramic as the sulfide solid electrolyte were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 30 min to obtain a slurry-like negative electrode mixture (negative electrode mixture slurry).

### <Formation of negative electrode active material layer>

The obtained negative electrode mixture slurry was applied onto a copper (Cu) foil as a negative electrode current collector layer by a blade method using an applicator and dried for 30 min on a hot plate heated to 100°C to form a negative electrode active material layer on the negative electrode current collector layer.

### <Formation of solid electrolyte layer>

Heptane, a 5-wt% heptane solution of a butadiene rubber (BR)-based binder, and a Li₂S-P₂S₅-based glass ceramic as the sulfide solid electrolyte were added to a polypropylene container and stirred with an ultrasonic dispersion apparatus (UH-50 manufactured by SMT) for 30 s. The container was then shaken with a shaker (TTM-1 manufactured by Sibata Scientific Technology Ltd.) for 30 min to obtain a solid electrolyte slurry.

The obtained solid electrolyte slurry was applied onto an aluminum (Al) foil as a release sheet by a blade method using an applicator and dried for 30 min on a hot plate heated to 100°C, whereby a solid electrolyte layer was formed. Three solid electrolyte layers were produced.

### <Preparation of positive electrode mixture>

Butyl butyrate, a 5-wt% butyl butyrate solution of a PVDF-based binder, LiNi_{1/3}Co_{1/3}Mn_{1/3}O₂ having an average particle size of 6 µm as the positive electrode active material, a Li₂S-P₂S₅-based glass ceramic as the sulfide solid electrolyte, and VGCF as the conductive aid were added to a polypropylene container and stirred with an ultrasonic dispersion apparatus (UH-50 manufactured by SMT) for 30 s.

The container was then shaken with a shaker (TTM-1 manufactured by Sibata Scientific Technology Ltd.) for 3 min, further stirring was carried out with the ultrasonic dispersion apparatus for 30 s, and the container was shaken with the shaker for 3 min to obtain a slurry-like positive electrode mixture (positive electrode mixture slurry).

### <Formation of positive electrode active material layer>

The obtained positive electrode mixture slurry was applied onto an Al foil as a positive electrode current collector layer by a blade method using an applicator and dried for 30 min on a hot plate heated to 100°C, whereby a positive electrode active material layer was formed on the positive electrode current collector layer.

### <Assembly of battery>

The positive electrode current collector layer, the positive electrode active material layer, and a first solid electrolyte layer were laminated in this order. The laminated product was set in a roll press machine and pressed at a pressing pressure of 100 kN/cm and a pressing temperature of 165°C, whereby a positive electrode laminated body was obtained.

The negative electrode current collector layer, the negative electrode active material layer, and a second solid electrolyte layer were laminated in this order. The laminated product was set in a roll press machine and pressed at a pressing pressure of 60 kN/cm and a pressing temperature of 25°C, whereby a negative electrode laminated body was obtained.

The Al foil as a release sheet was peeled off from the solid electrolyte layer surface of each of the positive electrode laminated body and the negative electrode laminated body. The Al foil as a release sheet was then peeled off from a third solid electrolyte layer.

The positive electrode laminated body and the negative electrode laminated body were set so that the solid electrolyte layer side of each thereof faced the third solid electrolyte layer and laminated to each other. The laminated body was set in a flat uniaxial press machine and temporarily pressed at 100 MPa and 25°C for 10 s. The laminated body was finally set in the flat uniaxial press machine and pressed at a pressing pressure of 200 MPa and a pressing temperature of 120°C for 1 min. As a result, an all-solid-state battery was obtained.

### «Evaluation»

### <Oxygen atom amount>

The oxygen atom amount was calculated from analysis values from elemental analysis using an oxygen/nitrogen/hydrogen analyzer (HORIBA, Ltd., EMGA-930).

### <Expansion amount>

The restraining pressure fluctuation of the all-solid-state battery of each example when restrained at a predetermined restraining pressure using a restraining jig and charged by constant current-constant voltage to 4.55 V at a 10-h rate (1/10 C) was measured. This restraining pressure fluctuation was defined as the expansion amount in the present disclosure. It should be noted that the restraining pressure fluctuation is the difference between the highest value and the lowest value in restraining pressure. The values of the Examples are shown as relative values when the value of Comparative Example 1 was set to 100.

### «Results»

The oxygen atom amount in silicon clathrate electrode active material and the expansion amount of silicon clathrate electrode active material in each example are shown in Table 1 and FIG. 1.

**[Table 1]**

| | Oxidation condition (relative value of amount of atmospheric air introduced) | Hydrogen halide treatment | | Oxygen atom amount [% by mass] | Expansion amount (relative value) |
|---|---|---|---|---|---|
| | | Hydrogen halide | Temperature [°C] | | |
| Example 1 | 100 | HF | 25 | 2.32 | 74.1 |
| Example 2 | - | HF | 25 | 3.34 | 1.8.5 |
| Example 3 | 1 | HF | 25 | 4.67 | 48.1 |
| Example 4 | - | HCl | 25 | 5.90 | 51.9 |
| Example 5 | - | HF | 0 | 6.93 | 51.9 |
| Comparative Example 1 | - | - | 25 | 19.4 | 100.0 |

As shown in Table 1 and FIG. 1, the batteries of Examples 1 to 5, in which the oxygen atom amount in silicon clathrate electrode active material is within the range of the present disclosure, had smaller expansion amounts than the battery of Comparative Example 1.

## Claims

1. A silicon clathrate electrode active material, comprising greater than 0% by mass and less than 19.4% by mass of oxygen atoms.

2. The silicon clathrate electrode active material according to Claim 1, comprising 2.0% by mass or greater of oxygen atoms.

3. The silicon clathrate electrode active material according to Claim 2, comprising 3.3% by mass or greater and 7.0% by mass or less of oxygen atoms.

4. The silicon clathrate electrode active material according to Claim 1, at least partially having a clathrate type II structure.

5. A negative electrode mixture, comprising the silicon clathrate electrode active material according to Claim 1 and a solid electrolyte.

6. The negative electrode mixture according to Claim 5, wherein the solid electrolyte is a sulfide solid electrolyte.

7. A negative electrode active material layer, containing the negative electrode mixture according to Claim 5.

8. A solid-state lithium-ion battery, comprising the negative electrode active material layer according to Claim 7.
